# EUROPÄISCHE PATENTSCHRIFT

(11) **EP 2 195 133 B1**
(45) Veröffentlichungstag und Bekanntmachung des Hinweises auf die Patenterteilung: **14.12.2011**
(21) Anmeldenummer: 08786292.6
(22) Anmeldetag: 22.07.2008
(51) Int. Cl.: B23D 45/04, B23Q 17/20, B23Q 17/24, G01N 21/31, G01N 21/35

(54) **WERKZEUGMASCHINE**
MACHINE TOOL
MACHINE-OUTIL

(30) Priorität: 20.09.2007 DE 102007044800
(43) Veröffentlichungstag der Anmeldung: 16.06.2010
(73) Patentinhaber: Robert Bosch GmbH, 70442 Stuttgart (DE)
(72) Erfinder: VISEL, Benjamin, 71701 Schwieberdingen (DE); STELLMANN, Georg, 71642 Ludwigsburg (DE); PLATZER, Joachim, 71686 Remseck-Hochberg (DE); JACKISCH, Sebastian, 71638 Ludwigsburg (DE)
(86) Internationale Anmeldenummer: PCT/EP2008/059556
(87) Internationale Veröffentlichungsnummer: WO 2009/040153

(56) Entgegenhaltungen:
- EP-A- 1 182 425
- WO-A-00/16036
- US-A- 4 500 784
- US-A1- 2004 226 424

## Beschreibung

Die Erfindung geht aus von einen Werkzeugmaschine nach dem Oberbegriff des Anspruchs 1.

Es ist eine Paneelsäge bekannt, die einen Arbeitstisch, eine Lagereinheit zur rotatorischen Tagerung eines Sägeblatts und einen durch einen Bediener betätigbaren Versenkarm zum Bewegen der Lagereinheit relativ zum Arbeitstisch aufweist.

Aus der WO 2000/16036 ist ein Überwachungssystem für ein Schneidwerkzeug bekannt, das es erlaubt die Abnutzung von speziellen Beschichtungen ("Coatings"), mit denen das eigentliche Werkzeug überzogen ist, zu detektieren. Die WO 2000/16036 offenbart ein Verfahren bzw. eine Vorrichtung, bei dem mittels Raman-Streuung und einer spektralen Analyse des Ramansignals die Abnutzung der Coatings identifiziert werden soll. Da die Coatings aus unterschiedlichen Materialen aufgebaut sind und die Ramanrückstreuung materialcharakteristisch ist, kann durch eine selektive, spektrale Ramananalyse detektiert werden, ob ein Coating bereits abgenutzt ist und damit das daruntertiegende Material zum Vorschein kommt. Der Oberbegriff von Auspruch 1 basiert auf diesem Dokument.

Die US 2004/0226424 A1 offenbart eine Kappsäge mit einem Sicherheitssystem. Das Sicherheitssystem der US 2004/0226424 A1 besteht aus einer mechanischen Schutzhaube, die mit einem elektischen Sensor versehen ist. Über einen elektrischen Empfänger, der stationär am Sägetisch angebracht ist, wird die relative Position der Schutzhaube zum Sägeblatt detektiert. Auf diese Weise ist es möglich, eine potentielle Gefahrensituation zu detektieren. Darüber hinaus zeigt die US 2004/0226424 A1 auch elektrische Sensierungsmittel, die die Positionsbestimmung einer Hand eines Anwenders der Säge erlaubt, um eine Gefahrensituation frühzeitig erkennen zu können.

### Vorteile der Erfindung

Die Erfindung geht aus von einer Werkzeugmaschine, insbesondere einer Sägemaschine, mit einer Arbeitsfläche zum Platzieren eines zu bearbeitenden werkstücks und einer Werkzeuglagereinheit zum Lagern eines Werkzeugs, die relativ zur Arbeitsfläche beweglich gelagert ist. Gemäß der Erfindung wird eine Werkzeugmaschine gemäß Anspruch 1 vorgeschlagen. Es wird vorgeschlagen, dass die Werkzeugmaschine eine Erkennungseinheit aufweist, welche zur Anwesenheitserkennung einer Materialart in einem Werkzeugbereich mittels der spektralen Auswertung einer Strahlung vorgesehen ist. Dadurch kann eine zuverlässige und schnelle Erkennung einer Anwendungssituation bei einer Werkzeugmaschine, insbesondere bei einer Bewegung der Werkzeuglagereinheit relativ zur Arbeitsfläche, erreicht werden. Unter einem "Werkzeugbereich" soll in diesem Zusammenhang insbesondere ein Bereich verstanden werden, der sich aus Punkten zusammensetzt, die einen kleinsten Abstand zu einem Werkzeug und/oder zu einem Werkzeugstreckenbereich der Werkzeugmaschine von maximal 10 cm, vorteilhaft maximal 5 cm und bevorzugt maximal 2 cm aufweisen. Ein "Werkzeugstreckenbereich" setzt sich hierbei insbesondere aus Punkten zusammen, die von einem Werkzeug potentiell belegbar sind, insbesondere aufgrund der beweglichen Lagerung der Werkzeuglagereinheit zum Lagern des Werkzeugs relativ zur Werkzeugmaschinenarbeitsfläche. Die Bilderfassungseinheit besitzt ein Blickfeld, das im Betrieb vorteilhafterweise einen überwachten Bereich der Werkzeugmaschine festlegt. Der überwachte Bereich umfasst vorzugsweise zumindest einen Teilbereich des Werkzeugbereichs. Vorteilhafterweise umfasst die vertikale Projektion des überwachten Bereichs auf die Arbeitsfläche die vertikale Projektion des Werkzeugbereichs auf die Arbeitsfläche. Ferner kann der überwachte Bereich zumindest einen Teilbereich des Werkzeugstreckenbereichs umfassen.

Außerdem wird vorgeschlagen, dass die Erkennungseinheit zur Anwesenheitserkennung insbesondere eines menschlichen Körperteils im Werkzeugbereich vorgesehen ist. Dies kann durch die Erkennung eines menschlichen Gewebes und/oder eines vom Bediener getragenen Stoffs erfolgen. Unter einer "Strahlung" soll insbesondere eine elektromagnetische Strahlung verstanden werden. Unter einem "Spektrum" einer Strahlung soll insbesondere eine Verteilung einer Strahlungskenngröße, insbesondere der Intensität der Strahlung, in Abhängigkeit von der Wellenlänge, der Frequenz und/oder der Zeit verstanden werden. Ferner soll unter einer "spektralen Auswertung" einer Strahlung insbesondere eine Signalauswertung verstanden werden, bei der ein Auswerteergebnis durch Erfassung eines Charakteristikums eines Spektrums der Strahlung, wie z.B. einer über die Wellenlänge integrierten Intensität, gewonnen wird. Gemäß der Erfindung wird vorgeschlagen, dass die Erkennungseinheit zumindest ein Sensormittel aufweist und die Werkzeugmaschine ein Mitnahmemittel aufweist, das bei einer Bewegung der Werkzeuglagereinheit relativ zur Arbeitsfläche zum Mitnehmen des Sensormittels dient. Dadurch kann eine hohe Sicherheit bei einer Bewegung der Werkzeuglagereinheit erreicht werden.

In einer bevorzugten Ausführungsform der Erfindung wird vorgeschlagen, dass die Werkzeuglagereinheit zur rotatorischen Lagerung eines Werkzeugs in einer Rotationsebene vorgesehen ist und die Erkennungseinheit ein Sensormittel aufweist, das seitlich der Rotationsebene angeordnet ist. Unter einer Anordnung "seitlich" der Rotationsebene soll insbesondere eine Anordnung in einem Halbraum verstanden werden, der durch die Rotationsebene begrenzt ist. Insbesondere soll eine vollständige Einbettung in diesen Halbraum verstanden werden. Unter einer "Rotationsebene" soll insbesondere eine Ebene verstanden werden, die den Schwerpunkt des Werkzeugs aufweist und senkrecht zu einer Rotationsachse des Werkzeugs ausgerichtet ist. Besonders vorteilhaft ist das Sensormittel seitlich des Werkzeugs angeordnet. Hierbei ist die Projektion des Sensormittels senkrecht zur Rotationsebene auf das Werkzeug in einer Werkzeugfläche eingebettet.

In einer vorteilhaften Weiterbildung der Erfindung wird vorgeschlagen, dass die Werkzeugmaschine ein Sicherungsmittel aufweist, das dazu vorgesehen ist, anhand eines Signals der Erkennungseinheit eine Bewegung der Werkzeuglagereinheit relativ zur Arbeitsfläche zu verhindern, wodurch ein Kontakt eines gelagerten Werkzeugs mit einem sich in einem Werkzeugstreckenbereich befindenden unerwünschten Objekt oder einem menschlichen Körperteil vorteilhaft vermieden werden kann.

Vorteilhafterweise ist die Erkennungseinheit zur Anwesenheitserkennung mittels der Auswertung eines Reflexionsspektrums einer auf ein Untersuchungsobjekt reflektierten Strahlung vorgesehen, wodurch eine effektive, auf einer Kontrasterfassung basierte Erkennung der Materialart erreicht werden kann.

In einer bevorzugten Ausführung der Erfindung wird vorgeschlagen, dass die Erkennungseinheit eine Sensoreinheit mit wenigstens einem Empfindlichkeitsbereich zur Strahlungserfassung in einem Wellenlängenbereich aufweist, der zumindest teilweise im Infrarotspektrum angeordnet ist, wodurch eine zuverlässige und schnelle Erkennung besonders kostengünstig erreicht werden kann.

Alternativ oder zusätzlich kann die Erkennungseinheit eine Signaleinheit aufweisen, die zu einem Ultrabreitbandbetrieb vorgesehen ist. Unter einer für einen Ultrabreitbandbetrieb vorgesehenen Signaleinheit soll insbesondere eine Einheit verstanden werden, mittels der ein ultrabreitbandiges Signal erzeugt, empfangen und/oder ausgewertet werden kann. Unter einem "ultrabreitbandigen Signal" soll insbesondere ein Signal verstanden werden, welches ein Frequenzspektrum mit einer Mittenfrequenz und einer Frequenzbandbreite von zumindest 500 MHz aufweist. Die Mittenfrequenz ist vorzugsweise im Frequenzbereich von 1 GHz bis 15 GHz gewählt.

Es kann eine besonders zuverlässige Erkennung erreicht werden, wenn der Wellenlängenbereich ein nahmittlerer Infrarotbereich ist. Es kann dadurch ein Empfindlichkeitsbereich bereitgestellt werden, welcher gezielt auf die Erfassung und die Auswertung eines Reflexionsspektrums abgestimmt ist. Unter einem "nahmittleren Infrarotbereich" soll in diesem Zusammenhang insbesondere ein Wellenlängenintervall des Infrarotspektrums verstanden werden, welches unterhalb der Wellenlänge 15 µm angeordnet ist. Es kann ferner ein hoher Kontrast zwischen menschlichem Gewebe und Werkstoff erreicht werden, wenn der Empfindlichkeitsbereich zur Erfassung einer Strahlung in einem Wellenlängenintervall des Infrarotspektrums unterhalb der Wellenlänge von 8 µm vorgesehen ist. Insbesondere ist von Vorteil, wenn der Wellenlängenbereich ein naher Infrarotbereich ist. Unter einem "nahen Infrarotbereich" soll in diesem Zusammenhang insbesondere ein Wellenlängenintervall des Infrarotspektrums verstanden werden, welches unterhalb der Wellenlänge von 1,5 µm angeordnet ist, wie insbesondere ein Wellenlängenintervall im IR-A Bereich. Der Wellenlängenbereich kann ferner teilweise im sichtbaren Bereich des elektromagnetischen Spektrums angeordnet sein.

Es kann ein Auswertesignal mit einer hohen Signalintensität erreicht werden, wenn die Erkennungseinheit eine Sendeeinheit aufweist, die dazu vorgesehen ist, eine Strahlung mit zumindest einem Strahlungsanteil im Wellenlängenbereich zu senden.

Es wird außerdem vorgeschlagen, dass die Sendeeinheit dazu vorgesehen ist, eine Strahlung im Wellenlängenbereich und in zumindest einem weiteren Wellenlängenbereich zu senden, wodurch die Genauigkeit in einem Erkennungsvorgang erhöht werden kann. Hierbei können zur Unterscheidung der Strahlungsanteilen in den verschiedenen Wellenlängenbereichen diese Strahlungsanteile jeweils unter der Form eines Pulses gesendet werden, wobei einem bestimmten Wellenlängenbereich eine bestimmte Pulsenlänge zugeordnet ist. Beispielsweise können die Pulsen gleichzeitig gesendet werden.

Eine vorteilhafte Unterscheidung kann ferner erreicht werden, wenn die Sendeeinheit dazu vorgesehen ist, eine Strahlung sukzessiv im Wellenlängenbereich und in zumindest einem weiteren Wellenlängenbereich zu senden. Es kann dadurch eine Strahlung gezielt in gewünschten Wellenlängenbereichen erzeugt werden, wobei bei einer Erfassung der Strahlung durch die Sensoreinheit auf eine aufwendige Filterung verzichtet werden kann. Ferner kann ein hohes Signal-/Rausch-Verhältnis erreicht werden. Unter einem "sukzessiven" Senden in zwei Wellenlängenbereichen soll insbesondere verstanden werden, dass das Senden im ersten Wellenlängenbereich und das Senden im zweiten Wellenlängenbereich weitestgehend überlappungsfrei sind. Hierbei soll eine Überlappungsdauer, bei der eine Strahlung simultan in beiden Wellenlängenbereichen gesendet wird, weniger als 10 %, vorteilhaft weniger als 5 % und bevorzugt weniger als 1 % der kleinsten Sendedauer in einem Wellenlängenbereich betragen. Besonders vorteilhaft sind die Sendevorgänge überlappungsfrei, wobei durch die Sendeeinheit voneinander getrennte Pulse emittiert werden.

Vorteilhafterweise weist die Sensoreinheit zumindest einen weiteren Empfindlichkeitsbereich auf, der zur Strahlungserfassung in einem weiteren Wellenlängenbereich vorgesehen ist, wodurch eine weiter gesteigerte Sicherheit in der Erkennung der Materialart erreicht werden kann. Die Wellenlängenbereiche können sich überlappen. Jedoch ist von Vorteil, wenn die Wellenlängenbereiche voneinander getrennt sind. Eine besonders genaue Erkennung kann erreicht werden, wenn die Sensoreinheit zumindest drei Empfindlichkeitsbereiche aufweist, die jeweils zur Strahlungserfassung in einem unterschiedlichen Wellenlängenbereich vorgesehen sind.

In diesem Zusammenhang wird vorgeschlagen, dass die Erkennungseinheit ein Auswertemittel aufweist, das dazu vorgesehen ist, das Vorhandensein der Materialart anhand eines Verhältnisses von zumindest zwei Strahlungskenngrößen zu erkennen, die jeweils einem Strahlungsanteil in einem unterschiedlichen Wellenlängenbereich zugeordnet sind. Dadurch kann vorteilhaft eine schnelle Erkennung erreicht werden. Insbesondere kann auf die Berücksichtigung einer Referenzstrahlung verzichtet werden. Unter einer "Strahlungskenngröße" soll insbesondere eine Kenngröße verstanden werden, die anhand einer auf die Sensoreinheit einfallenden Strahlung erfasst wird. Diese Kenngröße kann insbesondere eine elektrische Kenngröße sein. In einer bevorzugten Ausführung der Erfindung wird vorgeschlagen, dass der Wellenlängenbereich schmalbandig ausgebildet ist. Unter einem "schmalbandigen Wellenlängenbereich" soll in diesem Zusammenhang insbesondere ein Wellenlängenbereich verstanden werden, der eine Bandbreite von maximal 100 nm, vorteilhaft maximal 50 nm, bevorzugt maximal 20 nm und besonders bevorzugt maximal 10 nm aufweist. Es kann dadurch auf eine konstruktionsaufwendige Filterung einer erfassten Strahlung vorteilhaft verzichtet werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Paneelsäge mit einer in einer Schutzhaube integrierten Werkzeugbetriebsüberwachungsvorrichtung in einer Seitenansicht,
- Fig. 2: die Paneelsäge aus Figur 1 in einer Ansicht von oben,
- Fig. 3: ein Sägeblatt und einen Werkzeugbereich der Paneelsäge in einer Frontansicht,
- Fig. 4: eine Erkennungseinheit mit einer Sensoreinheit, einer Auswerteeinheit und Sicherheitsmitteln zum Blockieren einer Bewegung des Sägeblatts,
- Fig. 5: eine schematische Darstellung der Sensoreinheit mit einer Sendeeinheit zum Senden einer Strahlung,
- Fig. 6: die Sensoreinheit in einer Frontansicht,
- Fig. 7: den Verlauf des Transmissionsfaktors einer Empfangseinheit der Sensoreinheit in Abhängigkeit der Wellenlänge,
- Fig. 8: das Reflexionsspektrum einer auf das Reflexionsobjekt reflektierten Strahlung in Abhängigkeit der Wellenlänge,
- Fig. 9: eine interne Schaltung der Erkennungseinheit,
- Fig. 10: eine in der Erkennungseinheit gespeicherte Datenbank,
- Fig. 11: eine alternative Sendeeinheit der Sensoreinheit zur Erzeugung von Pulsen und
- Fig. 12: die Intensität einer von der Sendeeinheit aus Figur 11 erzeugten Strahlung.

### Beschreibung der Ausführungsbeispiele

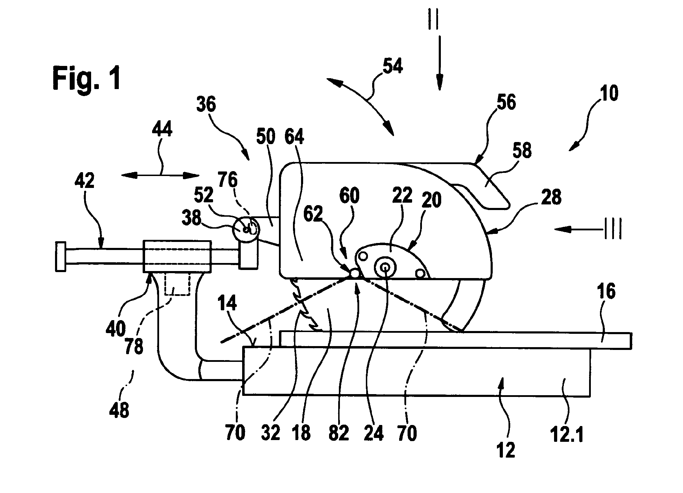

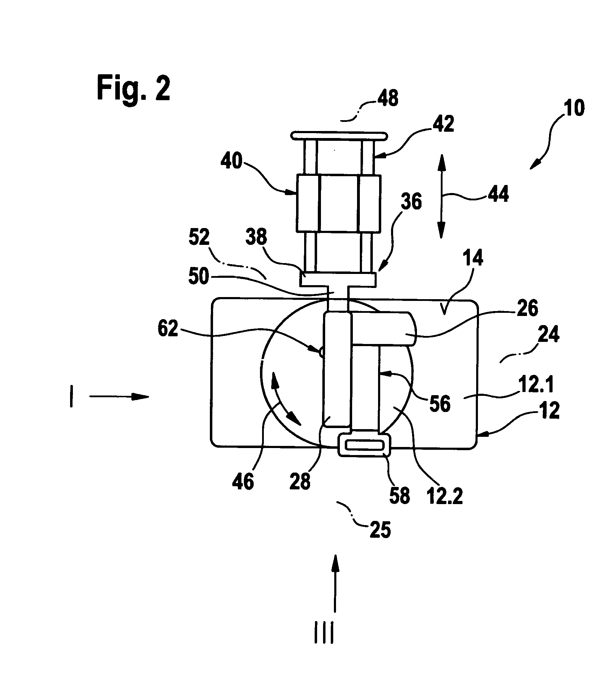

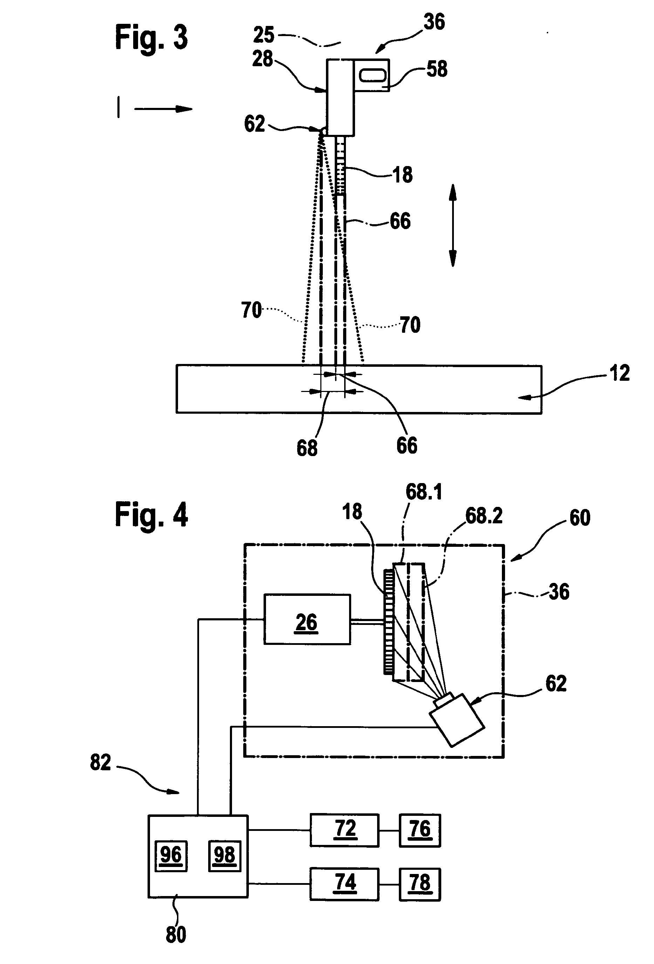

Figur 1 zeigt eine als Stationärgerät, und zwar als Paneelsäge ausgebildete Werkzeugmaschine 10 in einer Seitenansicht. In der folgenden Beschreibung wird ebenfalls auf die Figur 2 verwiesen, die die Werkzeugmaschine 10 aus Figur 1 in einer Ansicht von oben darstellt. Die Werkzeugmaschine 10 kann ferner als Kapp- und Gehrungssäge oder Zugsäge ausgebildet sein. Die Werkzeugmaschine 10 weist einen Arbeitstisch 12 auf, der eine zum Platzieren, z.B. zum Auflegen oder zum Aufstellen eines mittels der Werkzeugmaschine 10 zu bearbeitenden Werkstücks vorgesehene Arbeitsfläche 14 bildet. Wie Figur 2 zu entnehmen ist, weist der Arbeitstisch 12 ein erstes Bauelement 12.1, das mit einer nicht näher dargestellten Abstellfläche oder Stützvorrichtung zum Abstellen bzw. Stützen des Arbeitstischs 12 fest verbunden ist, und ein zweites, kreisförmiges Bauelement 12.2 auf, das um eine senkrecht zur Arbeitsfläche 14 stehende Achse relativ zum Bauelement 12.1 drehbar gelagert ist. In Figur 1 ist ein als Holzplatte ausgebildetes, zu sägendes Werkstück 16 auf die Arbeitsfläche 14 aufgelegt. Zur Bearbeitung des Werkstücks 16 umfasst die Werkzeugmaschine 10 ein Werkzeug 18, das als ein kreisförmiges Sägeblatt ausgeführt ist. Eine Werkzeuglagereinheit 20 der Werkzeugmaschine 10 ist zur Lagerung des Werkzeugs 18 vorgesehen. Die Werkzeuglagereinheit 20 weist ein Lagermittel 22 auf, das dazu dient, das Werkzeug 18 um eine Rotationsachse 24 rotatorisch zu lagern. Die Werkzeuglagereinheit 20 definiert hierbei eine Rotationsebene 25 für das Werkzeug 18, die den Schwerpunkt des Werkzeugs 18 einschließt und senkrecht zur Rotationsachse 24 steht. Bei einer Bearbeitung des Werkstücks 16 wird das Werkzeug 18 zu einer Rotation um die Rotationsachse 24 mittels einer als Elektromotor ausgebildeten Antriebseinheit 26 angetrieben. Zum Schutz eines Bedieners vor einer Berührung des Werkzeugs 18 ist die Werkzeugmaschine 10 mit einer als Schutzhaube vorgesehenen Schutzvorrichtung 28 zum Bedecken des Werkzeugs 18 versehen, die eine Schneidkante 32 des Werkzeugs 18 um zumindest eine Hälfte ihres Umfangs bedeckt. Wie Figur 1 zu entnehmen ist, ist die Werkzeuglagereinheit 20 an der Schutzvorrichtung 28 befestigt. Das Werkzeug 18, die Werkzeuglagereinheit 20, die Antriebseinheit 26 und die Schutzvorrichtung 28 sind Bestandteile einer Werkzeugeinheit 36, die relativ zum Arbeitstisch 12 und insbesondere zum Bauelement 12.1 beweglich gelagert ist. Die Werkzeugmaschine 10 weist hierzu eine Lagereinheit 38 auf, die dazu dient, die Werkzeugeinheit 36, darunter insbesondere die Werkzeuglagereinheit 20, relativ zur Arbeitsfläche 14 beweglich zu lagern und über welche die Werkzeuglagereinheit 20 mit der Arbeitsfläche 14 verbunden ist. Die Werkzeugeinheit 36 kann mittels der Lagereinheit 38 und eines Versenkarms 50 um eine horizontale, zur Rotationsachse 24 parallel ausgerichtete Rotationsachse 52 gedreht werden. Somit ist das Werkzeug 18 mit seiner Rotationsachse 24 entlang einer gekrümmten Bewegungsbahn 54 beweglich gelagert, welche ausgehend von einer in Figur 3 gezeigten Ruheposition der Werkzeugeinheit 36 in die in Figur 1 gezeigte tiefere Arbeitsposition an das zu bearbeitende Werkstück 16 führt.

Die Lagereinheit 38 ist selbst relativ zum Arbeitstisch 12 beweglich gelagert. Hierzu weist die Werkzeugmaschine 10 eine zweite Lagereinheit 40 auf. Die Lagereinheit 40 ist als eine Aufnahmeeinheit ausgeführt, die zur Aufnahme und Durchführung einer Führungseinheit 42 vorgesehen ist. Diese Führungseinheit 42, welche mit der Lagereinheit 38 fest verbunden ist, dient im Zusammenwirken mit der Lagereinheit 40 zu einer Führung der Werkzeugeinheit 36, darunter insbesondere der Werkzeuglagereinheit 20, und der Lagereinheit 38 relativ zur Arbeitsfläche 14. Diese Führung erfolgt in einer geraden Bewegungsrichtung 44, die parallel zur Arbeitsfläche 14 und senkrecht zur Rotationsachse 52 ausgerichtet ist. Die Lagereinheiten 38, 40 und die Werkzeugeinheit 36 können ferner in einer Drehrichtung 46 um eine senkrecht zur Arbeitsfläche 14 stehende Achse gedreht werden. Die Lagereinheit 40 kann selbst relativ zum Arbeitstisch 12, und zwar insbesondere zum Bauelement 12.2, beweglich ausgeführt sein. Insbesondere kann sie Schwenkbewegungen um eine horizontal und parallel zur Bewegungsrichtung 44 ausgerichtete Neigungsachse 48 ausführen, wodurch Kippbewegungen der Werkzeugeinheit 36 relativ zur Arbeitsfläche 14 ausführbar sind.

Die Bewegungen der Werkzeugeinheit 36 relativ zur Arbeitsfläche 14 können durch den Bediener betätigt werden. Hierzu ist die Werkzeugmaschine 10, und zwar die Werkzeugeinheit 36, mit einer Betätigungseinheit 56 versehen, die zu einer Bewegung der Werkzeuglagereinheit 20 relativ zur Arbeitsfläche 14 durch einen Bediener vorgesehen ist. Diese weist einen Handgriff 58 auf, der zu einem Greifen durch eine Hand eines Bedieners vorgesehen ist. Hiermit können die Bewegung der Werkzeugeinheit 36 entlang der horizontalen Bewegungsrichtung 44 und die Bewegung der Werkzeugeinheit 36 um die Rotationsachse 52 entlang der Bewegungsbahn 54 in Richtung auf die Arbeitsfläche 14 zu und umgekehrt durch den Bediener betätigt werden. Bei einem Bedienen der Werkzeugmaschine 10 greift ein Bediener mit einer Hand den Handgriff 58, während er die andere Hand typischerweise auf das Werkstück 16 auflegt. Zur Verhinderung eines Kontakts der Hand eines Bedieners mit dem rotierenden Werkzeug 18 ist die Werkzeugmaschine 10 mit einer Werkzeugbetriebsüberwachungsvorrichtung 60 versehen. Dies erfolgt mittels einer Sensoreinheit 62, deren Funktionsweise weiter unten beschrieben wird. Die Sensoreinheit 62 ist mit der Werkzeugeinheit 36, und zwar insbesondere mit der Werkzeuglagereinheit 20, fest verbunden. Hierbei ist die Sensoreinheit 62 an der Schutzvorrichtung 28 befestigt. Die Schutzvorrichtung 28 dient als Mitnahmemittel 64, das dazu dient, die Sensoreinheit 62 bei jeglicher Bewegung der Werkzeuglagereinheit 20 relativ zur Arbeitsfläche 14 mitzunehmen.

Figur 3 zeigt die Werkzeugeinheit 36 in deren Ruheposition in einer Frontansicht. Die Beweglichkeit des Werkzeugs 18 legt einen Werkzeugstreckenbereich 66 fest, der einem Raumbereich entspricht, welcher potentiell durch das Werkzeug 18 belegbar ist. Der Werkzeugstreckenbereich 66 ist mittels vertikaler gestrichelter Linien dargestellt. Der Werkzeugstreckenbereich 66 erstreckt sich ebenfalls aufgrund der Beweglichkeit des Werkzeugs 18 in Bewegungsrichtung 44 in horizontaler Richtung senkrecht zur Zeichnungsebene. Die Werkzeugbetriebsüberwachungsvorrichtung 60 dient dazu, einen Werkzeugbereich 68 zu überwachen. Dieser Werkzeugbereich 68 umfasst den Werkzeugstreckenbereich 66 und setzt sich zusätzlich aus Punkten zusammen, die einen kleinsten Abstand zum Werkzeugstreckenbereich 66 von maximal 2 cm aufweisen. Der zu überwachende Werkzeugbereich 68 außerhalb des Werkzeugstreckenbereichs 66 ist seitlich der Rotationsebene 25 angeordnet, und zwar ist er der Betätigungseinheit 56, insbesondere dem Handgriff 58, relativ zur Rotationsebene 25 abgewandt. Der Werkzeugstreckenbereich 66 und der Werkzeugbereich 68 sind mittels strichpunktierter Linien schematisch abgegrenzt. Die Sensoreinheit 62 weist ein durch einfach gestrichelte Linien in Figur 3 gezeigtes Erfassungsfeld 70 auf (siehe auch Figur 1), das einen überwachten Bereich der Werkzeugmaschine 10 definiert, der einen wesentlichen Teil des Werkzeugbereichs 68 umfasst. Wie Figur 3 zu entnehmen ist, kann der überwachte Bereich ebenfalls einen Teil des Werkzeugstreckenbereichs 66 umfassen. Zur Überwachung des Werkzeugbereichs 68 ist die Sensoreinheit 62 seitlich der Rotationsebene 25 und des Werkzeugs 18 angeordnet, und zwar auf einer der Betätigungseinheit 56, insbesondere dem Handgriff 58, abgewandten Seite der Rotationsebene 25. Hierbei sind die Betätigungseinheit 56 und die Sensoreinheit 62 beidseitig der Rotationsebene 25 angeordnet.

Figur 4 zeigt in einer schematischen Darstellung eine Schaltung der Werkzeugmaschine 10. Die Werkzeugmaschine 10 weist Aktorikeinheiten 72, 74 auf, die zur Durchführung von Sicherheitsmaßnahmen im Zusammenwirken mit der Werkzeugbetriebsüberwachungsvorrichtung 60 vorgesehen sind. Die Aktorikeinheiten 72, 74 sind jeweils dazu vorgesehen, ein Sicherungsmittel 76 bzw. 78 anzutreiben. Das Sicherungsmittel 76, welches in Figur 1 schematisch dargestellt ist, ist ein als Klemmmittel ausgebildetes Sperrmittel, das im Bereich der Rotationsachse 52 angeordnet ist. Das Sicherungsmittel 76 kann ferner als Zahnrad ausgebildet sein. Insbesondere ist das Sicherungsmittel 76 in der Lagereinheit 38 angeordnet. Das Sicherungsmittel 76 dient dazu, eine durch den Bediener angetriebene Rotationsbewegung der Werkzeugeinheit 36 um die Rotationsachse 52, d.h. eine Bewegung des Werkzeugs 18 entlang der Bewegungsbahn 54, zu verhindern. In einer diese Bewegung freigebenden Stellung ist das Sicherungsmittel 76 federbelastet. Dies kann beispielsweise mittels einer mechanischen Feder und/oder mittels eines Zugmagnets erfolgen. Die Aktorikeinheit 72 dient dazu, das Sicherungsmittel 76 - ausgehend von dieser die Bewegung freigebenden Stellung - in eine die Bewegung sperrende Sperrstellung zu bringen sowie ein Zurücksetzen des Sicherungsmittels 76 in dessen freigebende Stellung zu betätigen. Das Sicherungsmittel 78, welches in Figur 1 ebenfalls schematisch dargestellt ist, ist in der Lagereinheit 40 angeordnet. Es dient dazu, eine Bewegung einer durch den Bediener angetriebenen Translation der Werkzeugeinheit 36 entlang der Bewegungsrichtung 44 zu verhindern. Das Sicherungsmittel 78 ist ebenfalls ein als Klemmmittel, als Keilelement und/oder als Rastmittel, wie z.B. als Raststift, ausgebildetes Sperrmittel und kann mittels der Aktorikeinheit 74 zur Verhinderung eines Vorschubs der Führungseinheit 42 betätigt werden. Hierzu wird auf die Beschreibung des Sicherungsmittels 76 verwiesen.

Die Aktorikeinheiten 72, 74 lösen eine Betätigung des Sicherungsmittels 76 bzw. 78 in Abhängigkeit eines Signals der Werkzeugbetriebsüberwachungsvorrichtung 60 aus, und zwar insbesondere ein Signal einer Auswerteeinheit 80 der Werkzeugbetriebsüberwachungsvorrichtung 60. Die Auswerteeinheit 80 bildet im Zusammenwirken mit der Sensoreinheit 62 eine Erkennungseinheit 82, die zur Anwesenheitserkennung von menschlichem Gewebe im Werkzeugbereich 68 vorgesehen ist. Wird durch die Erkennungseinheit 82 das Vorhandensein von menschlichem Gewebe im Werkzeugbereich 68 erkannt, so wird ein Betätigungssignal zu einer Aktorikeinheit 72 und/oder 74 übertragen, die anhand dieses Betätigungssignals die oben beschriebene Sperrung einer Bewegung der Werkzeuglagereinheit 20 relativ zur Arbeitsfläche 14 auslöst. Hierzu steht die Auswerteeinheit 80 in Wirkverbindung mit den Aktorikeinheiten 72, 74. Ferner kann abhängig von einem derartigen Betätigungssignal ein Antrieb des Werkzeugs 18 gebremst bzw. gestoppt werden. Hierzu steht die Auswerteeinheit 80 in Wirkverbindung mit der Antriebseinheit 26. Alternativ oder zusätzlich kann eine weitere Aktorikeinheit in Verbindung mit der Auswerteeinheit 80 vorgesehen sein, die zu einem Bremsen des Werkzeugs 18 dient. Diese kann ein Sicherungsmittel betätigen, welches z.B. als Bremsscheibe oder als Trommelbremse ausgebildet ist und in Verbindung mit einer nicht gezeigten Welle steht, die in der Werkzeuglagereinheit 20 angeordnet ist und zu einer Rotation des Werkzeugs 18 um die Rotationsachse 24 von der Antriebseinheit 26 angetrieben wird.

Es wird ferner vorgeschlagen, wie in der Ausführung gemäß Figur 4 erkennbar ist, dass der von der Sensoreinheit 62 überwachte Werkzeugbereich 68 auf mehrere Modusbereiche verteilt ist, die jeweils einem Sicherheitsmodus zugeordnet sind. So kann z.B. der Werkzeugbereich 68 in einen Gefahrbereich 68.1, in welchem die oben beschriebenen Sicherheitsmodi aktivierbar sind, und einen Warnungsbereich 68.2 unterteilt werden. Dieser Warnungsbereich 68.2 grenzt vorzugsweise an den Gefahrbereich 68.1 an, ist in Richtung der Rotationsachse 24 auf die Rotationsebene 25 zu vor dem Gefahrbereich 68.1 angeordnet und weist eine Erstreckung in dieser Richtung von z.B. 1 cm auf. Erkennt die Erkennungseinheit 82 die Anwesenheit eines menschlichen Körperteils im Warnungsbereich 68.2, so löst die Auswerteeinheit 80 ein Warnsignal zum Warnen des Bedieners aus. Diese Warnung kann optisch oder akustisch erfolgen, oder sie kann mithilfe der oben beschriebenen Sperrung mittels des Sicherungsmittels 76 und/oder 78 erfolgen, während ein Bremsen oder ein Stoppen eines Werkzeugantriebs erst erfolgt, wenn das Vorhandensein eines menschlichen Körperteils im Gefahrbereich 68.1 erkannt ist.

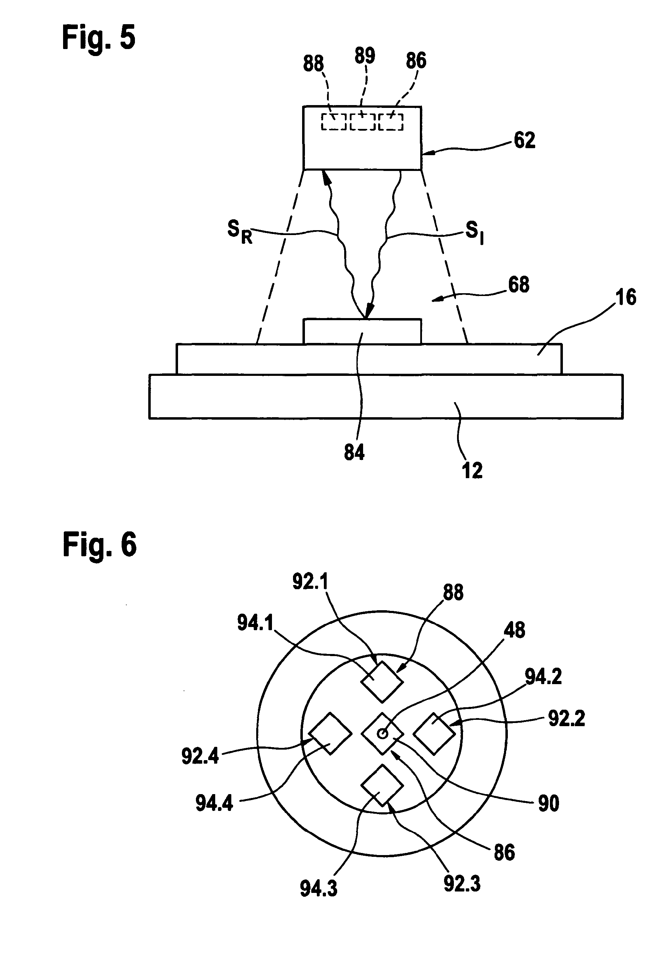

Das Funktionsprinzip der Erkennungseinheit 82 wird anhand der Figur 5 beschrieben. Es sind der Arbeitstisch 12, das Werkstück 16 und die Sensoreinheit 62 in einer schematischen Ansicht dargestellt. Der Übersichtlichkeit halber wird auf die Darstellung des Werkzeugs 18 und der Schutzvorrichtung 28 verzichtet. Auf dem Werkstück 16 im Werkzeugbereich 68 ist ein Untersuchungsobjekt 84 angeordnet. Dieses kann insbesondere eine Hand eines Bedieners, ein weiteres Störobjekt oder lediglich die Oberfläche des Werkstücks 16 sein. Die Sensoreinheit 62 weist eine Sendeeinheit 86 auf, die im Betrieb eine Strahlung S_{I} in den Werkzeugbereich 68 sendet. Diese Strahlung S_{I} wird auf das Untersuchungsobjekt 84 reflektiert und als Strahlung S_{R} von einer in der Figur schematisch dargestellten Empfangseinheit 88 der Sensoreinheit 62 empfangen. Die Sensoreinheit 62 weist ferner eine Markierungseinheit 89 zur Markierung des Werkzeugbereichs 68 auf.

Figur 6 zeigt die Sendeeinheit 86 und die Empfangseinheit 88 der Sensoreinheit 62 in einer Frontansicht, in welcher die optische Achse der Anordnung die Zeichnungsebene durchschneidet. Die Sendeeinheit 86 weist ein Sendemittel 90 auf, das als LED ausgebildet ist. In der direkten Umgebung des Sendemittels 90 sind vier Sensormittel 92 der Empfangseinheit 88 angeordnet, die jeweils als Photodiode ausgebildet sind.

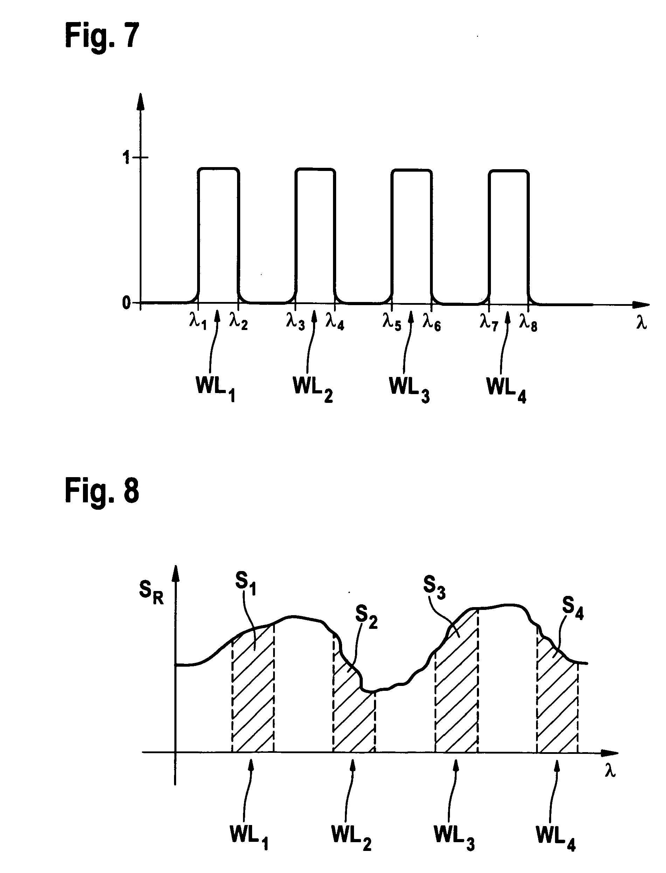

Die Sensormittel 92 weisen jeweils einen Empfindlichkeitsbereich 94 auf, der zur Strahlungserfassung jeweils in einem unterschiedlichen Wellenlängenbereich WL₁ = [λ₁,λ₂], WL₂ = [λ₃,λ₄], WL₃ = [λ₅,λ₆] bzw. WL₄ = [λ₇,λ₈] vorgesehen ist. Dies ist in Figur 7 schematisch dargestellt. Figur 7 zeigt den Verlauf des Durchlassfaktors der Empfangseinheit 88 in Abhängigkeit der Wellenlänge λ der durch die Empfangseinheit 88 empfangenen Reflexionsstrahlung S_{R}. Die Wellenlängenbereiche WLᵢ sind im betrachteten Ausführungsbeispiel zueinander überlappungsfrei ausgebildet. Die Wellenlängenbereiche WLᵢ weisen beispielhaft eine zentrale Wellenlänge von 630 nm, 700 nm, 980 nm, 1050 nm und 1200 nm auf und sind schmalbandig ausgebildet mit jeweils einer Bandbreite von ca. 10 nm. Die Empfangseinheit 88 kann zu einer schmalbandigen Filterung der erfassten Strahlung S_{R} zusätzlich zu den Sensormitteln 92 mit einem System von Filterbauteilen versehen sein, das den Sensormitteln 92 vorgeschaltet ist. Bei der Ausführung der Sensormittel 92 als selektive Photodioden ist eine schmalbandige Filterung systeminhärent, wodurch weitere Filterbauteile vorteilhaft vermieden werden können. Alternativ oder zusätzlich zu Photodioden können die Sensormittel 92 als CCD- oder CMOS-Felder, InGaAs-Detektoren, pyroelektrische Detektoren usw. ausgebildet sein.

Die Wellenlängenbereiche WL₂, WL₃, WL₄ sind im Infrarotspektrum angeordnet. Insbesondere sind diese Wellenlängenbereiche WL₂, WL₃, WL₄ jeweils Bereiche des nahen Infrarotspektrums IR-A mit den Grenzwerten [700 nm, 1400 nm]. Der Wellenlängebereich WL₁ ist zumindest teilweise im sichtbaren Bereich des elektromagnetischen Spektrums angeordnet. Alternativ oder zusätzlich können Wellenlängenbereiche in den Infrarotbereichen IR-B (1,4 - 3 µm) und IR-C (3 - 15 µm) gewählt werden. Die Sendeeinheit 86 mit dem Sendemittel 90 erzeugt eine Strahlung, die die in Figur 7 gezeigten Wellenlängenbereiche WLᵢ umfasst.

Das Prinzip der Anwesenheitserkennung von menschlichem Gewebe im Werkzeugbereich 68 wird anhand der Figuren 8, 9, und 10 erläutert. Figur 8 zeigt das Reflexionsspektrum der auf das Untersuchungsobjekt 84 reflektierten und von den Sensormitteln 92 erfassten Strahlung S_{R}. Dieses Reflexionsspektrum entspricht der Verteilung der Signalintensität in Abhängigkeit der Wellenlänge λ der Strahlung S_{R}. Die Sensormittel 92 bzw. die Empfindlichkeitsbereiche 94 erfassen jeweils einen Teil des Reflexionsspektrums in den entsprechenden Wellenlängenbereichen WLᵢ. Die Sensormittel 92 erzeugen an ihrer Ausgangsklemme jeweils eine Strahlungskenngröße Vᵢ, die jeweils als elektrische Spannung ausgebildet ist. Die Strahlungskenngröße V₁ beispielsweise ist proportional zu einer über den Wellenlängenbereich WL₁ integrierten und in der Figur 8 schraffierten Signalintensität s₁ der Strahlung S_{R}.

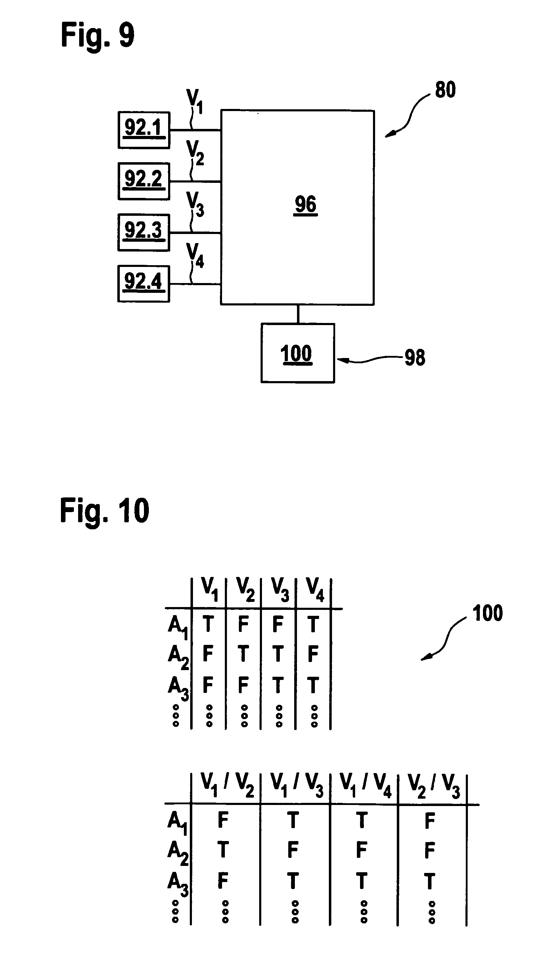

Wie der Figur 9 entnommen werden kann, werden die Strahlungskenngrößen Vᵢ auf einen Eingang eines Auswertemittels 96, z.B. eines Mikroprozessors, der Auswerteeinheit 80 gegeben. In einer weiteren Variante ist denkbar, dass die Strahlungskenngrößen Vᵢ verstärkt werden. Bei einer Auswertung werden die Strahlungskenngrößen Vᵢ mit Werten einer in einer Speichereinheit 98 der Auswerteeinheit 80 gespeicherten Datenbank 100 mittels logischer Operationen verglichen. Diese Datenbank 100 ist in Figur 10 schematisch dargestellt. In einer ersten Auswertungsstrategie werden die erfassten Strahlungskenngrößen Vᵢ mit gespeicherten Werten A₁, A₂, A₃ usw. verglichen. Jedem Paar (Vᵢ, Aᵢ) ist eine Erkennungsvariable zugeordnet, die die Werte "False" (F) oder "True" (T) annehmen kann. Beim Wert "F" wird ein Vorhandensein von menschlichem Gewebe im Werkzeugbereich 68 ausgeschlossen. In einer zweiten, alternativen oder zusätzlichen Auswertungsstrategie werden durch das Auswertemittel 96 Verhältnisse V₁ / V₂; V₁ / V₃ usw. zwischen den verschiedenen Strahlungskenngrößen Vᵢ ermittelt. Diese Verhältnisse werden mit gespeicherten Werten A₁, A₂, A₃ usw. verglichen, wodurch, wie oben beschrieben, auf das Vorhandensein von menschlichem Gewebe im Werkzeugbereich 68 geschlossen werden kann. Durch die Bildung von Verhältnissen kann eine intensitätsunabhängige Erkennung durchgeführt werden. In der Speichereinheit 98 können außerdem Informationen über die spektrale Empfindlichkeit der Sensormittel 92 gespeichert sein, die zur Auswertung der Strahlungskenngrößen Vᵢ herangezogen werden können.

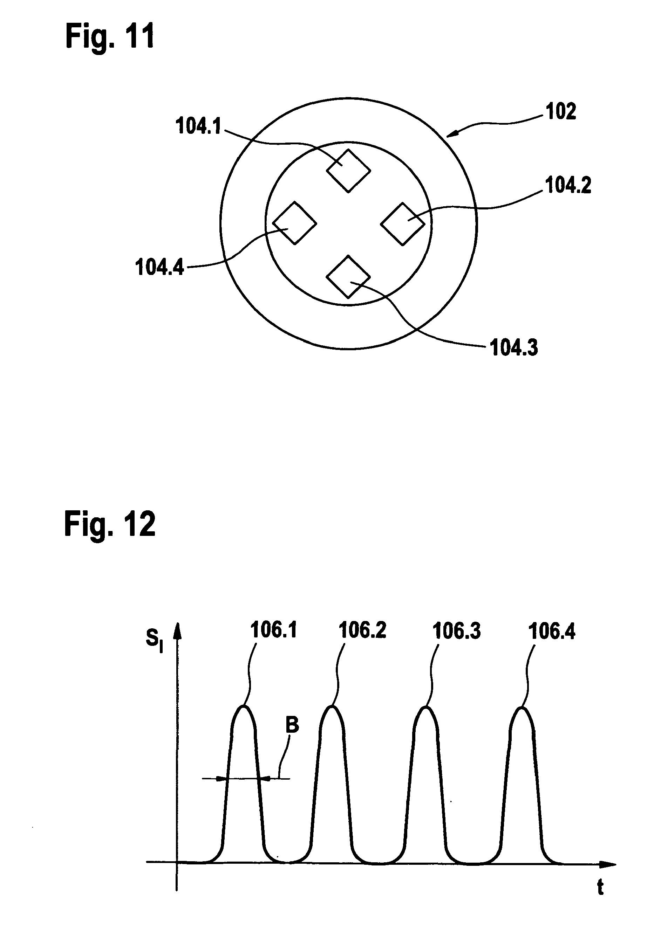

In einer alternativen Ausführungsvariante, die in den Figuren 11 und 12 gezeigt ist, ist die Sensoreinheit 62 mit einer Sendeeinheit 102 versehen, die zumindest zwei, insbesondere zumindest drei und besonders bevorzugt zumindest vier Sendemittel 104.1 bis 104.4 zur Sendung der Strahlung in jeweils einem unterschiedlichen Wellenlängenbereich WL₁ bis WL₄ aufweist, die im Betrieb der Sendeeinheit 102 sukzessiv betrieben werden. Figur 9 zeigt die Sendeeinheit 102, welche eine Strahlung S_{I} erzeugt, die eine Reihe von Pulsen 106.1 bis 106.4 aufweist und in Figur 12 dargestellt ist. Figur 12 zeigt den Verlauf der Intensität der Strahlung S_{I} in Abhängigkeit von der Zeit t. Ein Puls 106 weist eine Breite B von ca. 100 µs auf. Die Sendeeinheit 102 ist dazu vorgesehen, eine Strahlung sukzessiv in den Wellenlängenbereichen WL₁ bis WL₄ zu senden. Hierbei sind in einer Folge von vier aufeinander folgenden Pulsen 106.1 bis 106.4 die Pulse jeweils einem unterschiedlichen Wellenlängenbereich WL₁ bis WL₄ zugeordnet. Die Sendemittel 104 können z.B. jeweils als LED ausgebildet sein. Durch ein solches sukzessives Strahlen in verschiedenen Wellenlängenbereichen WLᵢ kann auf eine aufwendige Filterung der erfassten reflektierten Strahlung S_{R} verzichtet werden.

## Patentansprüche

1. Werkzeugmaschine, insbesondere Sägemaschine, mit einer Arbeitsfläche (14) zum Platzieren eines zu bearbeitenden Werkstücks (16) und einer Werkzeuglagereinheit (20) zum Lagern eines Werkzeugs (18), die relativ zur Arbeitsfläche (14) beweglich gelagert ist, wobei eine Erkennungseinheit (82), welche zur Anwesenheitserkennung einer Materialart in einem Werkzeugbereich (68) mittels der spektralen Auswertung einer Strahlung (S_{R}) vorgesehen ist, und wobei die Erkennungseinheit (82) zumindest ein Sensormittel (92) aufweist **dadurch gekennzeichnet, dass** ein Mitnahmemittel (64) vorgesehen ist, das bei einer Bewegung der Werkzeuglagereinheit (20) relativ zur Arbeitsfläche (14) zum Mitnehmen des Sensormittels (92) dient.

2. Werkzeugmaschine nach Anspruch 1, **dadurch gekennzeichnet, dass** die Werkzeuglagereinheit (20) zur rotatorischen Lagerung eines Werkzeugs (18) in einer Rotationsebene (25) vorgesehen ist und die Erkennungseinheit (82) ein Sensormittel (92) aufweist, das seitlich der Rotationsebene (25) angeordnet ist.

3. Werkzeugmaschine nach einem der vorhergehenden Ansprüche, **gekennzeichnet durch** ein Sicherungsmittel (76, 78), das dazu vorgesehen ist, anhand eines Signals der Erkennungseinheit (82) eine Bewegung der Werkzeuglagereinheit (20) relativ zur Arbeitsfläche (14) zu verhindern.

4. Werkzeugmaschine nach einem der vorhergehenden Ansprüche, **dadurch gekennzeichnet, dass** die Erkennungseinheit (82) zur Anwesenheitserkennung mittels der Auswertung eines Reflexionsspektrums einer auf ein Untersuchungsobjekt (84) reflektierten Strahlung (Sₙ) vorgesehen ist.

5. Werkzeugmaschine nach einem der vorhergehenden Ansprüche, **dadurch gekennzeichnet, dass** die Erkennungseinheit (82) eine Sensoreinheit mit wenigstens einem Empfindlichkeitsbereich (94.2) zur Strahlungserfassung in einem Wellenlängenbereich (WL₂) aufweist, der zumindest teilweise im Infrarotspektrum angeordnet ist.

6. Werkzeugmaschine nach Anspruch 5, **dadurch gekennzeichnet, dass** der Wellenlängenbereich (WL₂) ein nahmittlerer Infrarotbereich ist.

7. Werkzeugmaschine nach Anspruch 5 oder 6, **dadurch gekennzeichnet, dass** die Erkennungseinheit (82) eine Sendeeinheit (86; 102) aufweist, die dazu vorgesehen ist, eine Strahlung mit zumindest einem Strahlungsanteil im Wellenlängenbereich (WL₂) zu senden.

8. Werkzeugmaschine nach Anspruch 7, **dadurch gekennzeichnet, dass** die Sendeeinheit (102) dazu vorgesehen ist, eine Strahlung im Wellenlängenbereich (WL₂) und in zumindest einem weiteren Wellenlängenbereich (WL₁, WL₃, WL₄) zu senden.

9. Werkzeugmaschine nach Anspruch 8, **dadurch gekennzeichnet, dass** die Sendeeinheit (102) dazu vorgesehen ist, eine Strahlung sukzessiv im Wellenlängenbereich (WL₂) und im weiteren Wellenlängenbereich (WL₁, WL₃, WL₁) zu senden.

10. Werkzeugmaschine nach einem der Ansprüche 5 bis 9, **dadurch gekennzeichnet, dass** die Sensoreinheit (62) zumindest einen weiteren Empfindlichkeitsbereich (94.1, 94.3, 94.4) aufweist, der zur Strahlungserfassung in einem weiteren Wellenlängenbereich (WL₁, WL₃, WL₄) vorgesehen ist.

11. Werkzeugmaschine nach Anspruch 10, **dadurch gekennzeichnet, dass** die Erkennungseinheit (82) ein Auswertemittel (96) aufweist, das dazu vorgesehen ist, das Vorhandensein der Materialart anhand eines Verhältnisses von zumindest zwei Strahlungskenngrößen (V₁, V₂, V₃, V₄) zu erkennen, die jeweils einem Strahlungsanteil in einem unterschiedlichen Wellenlängenbereich (WL₁, WL₂, WL₃, WL₄) zugeordnet sind.

12. Werkzeugmaschine nach einem der Ansprüche 5 bis 11, **dadurch gekennzeichnet, dass** der Wellenlängenbereich (WL₂) schmalbandig ausgebildet ist.

## Claims

1. Machine tool, in particular a sawing machine, having a work surface (14) for the placing of a workpiece (16) to be processed, and a tool bearing unit (20) for bearing a tool (18) which is movably supported relative to the work surface (14), there being present a detection unit (82) which is provided to detect the presence of a material type in a tool area (68) by means of the spectral evaluation of irradiation (S_{R}), and the detection unit (82) having at least one sensor means (92), **characterized in that** a driving means (64) is provided which serves to drive the sensor means (92) during a movement of the tool bearing unit (20) relative to the work surface (14).

2. Machine tool according to Claim 1, **characterized in that** the tool bearing unit (20) is provided for the rotary bearing of a tool (18) in a plane (25) of rotation, and the detection unit (82) has a sensor means (92) which is arranged to the side of the plane (25) of rotation.

3. Machine tool according to one of the preceding claims, **characterized by** a safety means (76, 78) which is provided for the purpose of preventing a movement of the tool bearing unit (20) relative to the work surface (14) using a signal from the detection unit (82).

4. Machine tool according to one of the preceding claims, **characterized in that** the detection unit (82) is provided for detecting the presence of irradiation (S_{R}) reflected onto an examination object (84) using the evaluation of a reflective spectrum.

5. Machine tool according to one of the preceding claims, **characterized in that** the detection unit (82) has a sensor unit with at least one sensitivity range (94.2) for irradiation measurement in a wavelength region (WL₂) which is arranged at least partially in the infrared spectrum.

6. Machine tool according to Claim 5, **characterized in that** the wavelength region (WL₂) is a near-medium infrared region.

7. Machine tool according to Claim 5 or 6, **characterized in that** the detection unit (82) has a transmit unit (86; 102) which is provided for the purpose of transmitting irradiation with at least one irradiation component in the wavelength region (WL₂).

8. Machine tool according to Claim 7, **characterized in that** the transmit unit (102) is provided for the purpose of transmitting irradiation in the wavelength region (WL₂) and in at least one further wavelength region (WL₁, WL₃, WL₄).

9. Machine tool according to Claim 8, **characterized in that** the transmit unit (102) is provided for the purpose of transmitting irradiation successively in the wavelength region (WL₂) and in the further wavelength region (WL₁, WL₃, WL₄).

10. Machine tool according to one of Claims 5 to 9, **characterized in that** the sensor unit (62) has at least one further sensitivity region (94.1, 94.3, 94.4) which is provided for the purpose of irradiation measurement in a further wavelength region (WL₁, WL₃, WL₄).

11. Machine tool according to Claim 10, **characterized in that** the detection unit (82) has an evaluation means (96) which is provided for the purpose of detecting the presence of the material type with the aid of a ratio of at least two irradiation characteristic variables (V₁, V₂, V₃, V₄) which are respectively assigned to an irradiation component in a different wavelength region (WL₁, WL₂ WL₃, WL₄).

12. Machine tool according to one of Claims 5 to 11, **characterized in that** the wavelength region (WL₂) is designed with a narrow band.

## Revendications

1. Machine-outil, en particulier machine de sciage, dotée
d'une surface de travail (14) destinée à placer une pièce (16) à traiter,
d'une unité (20) de montage d'outil destinée à monter un outil (18) à déplacement par rapport à la surface de travail (14),
une unité de détection (82) étant prévue pour détecter la présence d'un type de matériau dans une plage d'outil (68) au moyen de l'évaluation spectrale d'un rayonnement (S_{R}),
l'unité de détection (82) présentant au moins un moyen de détection (92),
**caractérisée en ce que**
un moyen d'entraînement (64) est prévu pour servir à entraîner le moyen de détection (92) lorsque l'unité (20) de montage d'outil est déplacée par rapport à la surface de travail (14).

2. Machine-outil selon la revendication 1, **caractérisée en ce que** l'unité (20) de montage d'outil est prévue pour un montage rotatif d'un outil (18) dans un plan de rotation (25) et **en ce que** l'unité de détection (82) présente un moyen de détection (92) disposé latéralement par rapport au plan de rotation (25).

3. Machine-outil selon l'une des revendications précédentes, **caractérisée en ce qu'**un moyen de fixation (76, 78) est prévu pour empêcher un déplacement de l'unité (20) de montage d'outil par rapport à la surface de travail (14) à l'aide d'un signal de l'unité de détection (82).

4. Machine-outil selon l'une des revendications précédentes, **caractérisée en ce que** l'unité de détection (82) est prévue pour détecter la présence au moyen de l'évaluation du spectre de réflexion d'un rayonnement (S_{R}) réfléchi par un objet étudié (84).

5. Machine-outil selon l'une des revendications précédentes, **caractérisée en ce que** l'unité de détection (82) présente une unité de saisie qui présente au moins une plage de sensibilité (94.2) pour détecter le rayonnement dans une plage de longueurs d'onde (WL₂) située au moins en partie dans le spectre infrarouge.

6. Machine-outil selon la revendication 5, **caractérisée en ce que** la plage de longueurs d'onde (WL₂) est la plage de l'infrarouge proche du centre.

7. Machine-outil selon les revendications 5 ou 6, **caractérisée en ce que** l'unité de détection (82) présente une unité d'émission (86; 102) prévue pour émettre un rayonnement dont au moins une partie est située dans la plage de longueurs d'onde (WL₂).

8. Machine-outil selon la revendication 7, **caractérisée en ce que** l'unité d'émission (102) est prévue pour émettre un rayonnement dans la plage de longueurs d'onde (WL₂) et dans au moins une autre plage de longueurs d'onde (WL₁, WL₃, WL₄).

9. Machine-outil selon la revendication 8, **caractérisée en ce que** l'unité d'émission (102) est prévue pour envoyer un rayonnement successivement dans la plage de longueurs d'onde (WL₂) et dans les autres plages de longueurs d'onde (WL₁, WL₃, WL₄).

10. Machine-outil selon l'une des revendications 5 à 9, **caractérisée en ce que** l'unité de détecteur (62) présente au moins une autre plage de sensibilité (94.1, 94.3, 94.4) prévue pour détecter le rayonnement dans une autre plage de longueurs d'onde (WL₁, WL₃, WL₄).

11. Machine-outil selon la revendication 10, **caractérisée en ce que** l'unité de détection (82) présente un moyen d'évaluation (96) prévu pour détecter la présence d'un type de matériau à l'aide d'un rapport entre au moins deux grandeurs caractéristiques de rayonnement (V₁, V₂, V₃, V₄) qui sont chacune associées à une partie du rayonnement dans différentes plages de longueurs d'onde (WL₁, WL₂, WL₃, WL₄).

12. Machine-outil selon l'une des revendications 5 à 11, **caractérisée en ce que** la plage de longueurs d'onde (WL₂) est une bande étroite.
